# EUROPEAN PATENT APPLICATION

(11) **EP 4 089 060 A1**
(43) Date of publication of application: **16.11.2022**
(21) Application number: 21198970.2
(22) Date of filing: 24.09.2021
(51) Int. Cl.: C04B 5/06

(54) **ADDITIVE FOR CONSTRUCTION MATERIALS AND HYDRAULIC BINDER COMPRISING SAID ADDITIVE**

(30) Priority: 14.05.2021 IT 202100012530
(71) Applicant: Opigeo S.r.l., 35138 Padova (IT)
(72) Inventor: BELLOTTO, Maurizio Pietro, 20144 Milano (MI) (IT); PASINATO, Veronica, 35124 Padova (IT)
(74) Representative: Gallo, Luca

(57) **Abstract**

Additive for construction materials comprising at least one hydraulic binder, the additive comprising at least one chelating agent and at least one ionic polyelectrolyte.

## Description

### Field of application

The present invention relates to an additive for construction materials and a hydraulic binder comprising the aforementioned additive, according to the preamble of the respective independent claims.

The additive is advantageously intended to be added to construction materials comprising at least one hydraulic binder, preferably of the geopolymeric type and/or with alkaline activation, in order to modify the hydraulic and mechanical properties thereof.

More particularly, the additive object of the present invention can be used to reduce the viscosity and the flow threshold of the mixture containing the hydraulic binder, and preferably to accelerate the hydraulic reactions and improve the mechanical properties of the aforementioned hydraulic binder once hardened.

Therefore, the additive for construction materials and the construction material comprising the aforementioned additive fall within the industrial field of the production of raw materials for civil engineering, and more particularly within the industrial field of the production of raw materials which can be used as alternatives to common Portland cement.

### Prior art

The term hydraulic binder refers to an inorganic material which, when mixed with water, is subjected to a hydration reaction to form a paste, which is initially deformable and workable and which hardens gradually, both in air and in water, up to taking on high mechanical strength properties. This property is due to the formation of hydrated, insoluble or poorly soluble compounds, starting from calcium silicates, aluminates and ferrites present in the binder.

The hydraulic binder is therefore susceptible of being employed in the attainment of manufactured goods and structures intended for civil use such as building, geotechnical, infrastructural, hydraulic, structural and urban planning works in general.

The most common hydraulic binder is Portland cement, which mixed with water forms a cementitious paste known in the technical jargon of the sector with the term "grout". Portland cement is obtained by grinding the baking product of a mixture of clay and limestone (clinker) with small additions of gypsum, wherein gypsum takes on the role of regulator of hydration reactions.

More in detail, the Portland cement production process includes a step of mixing and grinding of the raw materials, consisting of clay and limestone, a baking step, by means of a fuel burner at a temperature of about 1450 °C, from which clinker is obtained in the form of centimeter granules.

The clinker is subsequently cooled, mixed with gypsum (as described above) and subsequently ground, to obtain Portland cement, which is then miscible with water to allow the hydration reaction and allow the use of Portland cement as a hydraulic binder as briefly described above.

The use of Portland cement as a hydraulic binder has proved to be not without drawbacks in practice.

The main drawback lies in the fact that this production process, in addition to requiring significant energy consumption (both for the two grinding steps and for the baking step), produces during the baking step, through the fuel burner, a high quantity of greenhouse gases, and in particular of carbon dioxide.

In fact, it is now established that the production of Portland cement is one of the main causes of greenhouse gas emissions (and in particular carbon dioxide) at a global level.

In particular, most of the aforementioned carbon dioxide (CO₂) produced derives from the production processes of clinker (necessary for the subsequent creation of the cement-based hydraulic binder), both due to the calcination reactions of the limestone and the combustion of fossil fuels. In fact, it is estimated that the production of one ton of clinker produces an amount of carbon dioxide (CO₂) equal to 862 kg.

In order to at least partially solve the problem of greenhouse gas emissions during the production of Portland cement, geopolymeric and/or alkaline-activated hydraulic binders have been developed, whose production method (not involving the use of clinker) allows the carbon dioxide emissions to be reduced, making these binders less impacting from an environmental point of view.

The main materials used (alone or in combination with each other) for the realization of the aforementioned geopolymer and/or alkaline-activated binders are granulated and ground blast furnace slags, metakaolin and fly ash, which are mixed with an alkaline activator (e.g. a solution of sodium or potassium hydroxide and/or silicate). Over time, alkaline-activated hydraulic binders have been developed the most, including granulated and ground blast furnace slags (also known as GGBS), which allow a binder with high chemical resistance and good mechanical properties to be obtained.

More specifically, the granulated and ground blast furnace slags is obtained through a process of grinding the rapidly cooled blast furnace slag (known in the technical jargon of the sector as blast furnace slag) which is obtained from the production of cast iron.

The aforementioned geopolymeric and/or alkaline-activated binders also include various additives, which are added to the mixture and allow the mechanical properties and the rheological properties of the mixture to be improved, for example by increasing the fluidity of the mixture (fluidifying agents) and reducing the hardening time (accelerators).

Currently, the additives used in these geopolymeric and/or alkaline-activated binders alternative to Portland cement are the same used for the common Portland cement mixtures, although the latter do not include geopolymer and/or alkaline-activated hydraulic binders.

However, even the aforementioned alternative hydraulic binders to Portland cement have proved to be not free from drawbacks in practice.

A first drawback lies in that the mechanical properties of the geopolymer and/or alkaline-activated mixture decrease as the quantity of alkaline activator present in the mixture decreases and as its dilution increases, up to about 20% compared to common Portland cement.

In practice it has in fact been shown that the additives used for Portland cement have proved to be ineffective with mixtures including geopolymeric and/or alkaline-activated hydraulic binders, and in particular blast furnace slag.

Therefore, the above additives have proved unsuitable for use in mixture with alternative binders to Portland cement.

This has meant that, in particular for heavy-duty applications, in which mechanical strength is a necessary condition for making the product, and in particular in the case in which a reduced quantity of water is to be used, it is preferable to use cementitious mixtures based on Portland cement only in the mixture.

A further drawback lies in the fact that the hydraulic properties of the mixture, like the mechanical properties, decrease as the quantity of alkaline activator decreases and as its dilution increases, and in particular the time necessary for hardening and complete curing of the manufactured article increases.

Therefore, the aforementioned drawbacks have meant that in the construction sector, and in particular in the building sector, geopolymeric and/or alkaline-activated binders have not found wide use, with particular reference to high-performance binders containing reduced quantities of alkaline activator.

### Disclosure of the invention

In this situation, the problem underlying the present invention is that of eliminating the drawbacks of the aforementioned prior art, by providing an additive for construction materials and a hydraulic binder comprising the aforementioned additive, which allow products with high mechanical performance to be obtained, even in cases where there is a reduced percentage of alkaline activator.

A further object of the present invention is to provide an additive for construction materials which allows the rheological properties of a hydraulic binder, preferably geopolymeric and/or alkaline activated, to be modified, increasing the fluidity of the mixture.

A further object of the present invention is to provide an additive which allows the workability of a hydraulic binder, preferably geopolymeric and/or alkaline activated, to be increased.

### Brief description of the drawings

The technical features of the invention, according to the aforesaid aims, can clearly be seen in the content of the claims below, and its advantages will become more readily apparent in the detailed description that follows, made with reference to the accompanying drawings, which illustrate a preferred embodiment, which is purely exemplary and not limiting, in which:

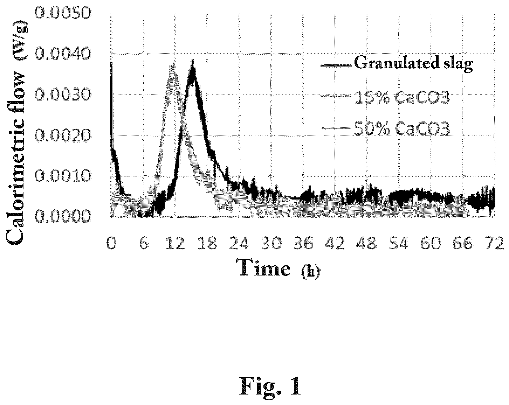

- Figure 1 shows a graph of a calorimetric test performed on an example of formulation of a hydraulic and/or alkaline activated binder.

### Detailed description of an example of a preferred embodiment

The additive object of the present invention can be used for construction materials which comprise at least one hydraulic binder, preferably as a fluidifying or super-fluidifying additive.

More in detail, the present additive can be mixed during the production of the hydraulic binder, which is subsequently capable of being mixed with water, alkaline activators and aggregates to form the cement mortar or concrete.

However, it is also possible to use the additive object of the present invention on an already formed hydraulic binder, for example by adding it while making the mortar or concrete.

The term hydraulic binder hereinafter shall refer to both hydraulic binders containing cement, for example Portland cement, and to geopolymeric and/or alkaline-activated hydraulic binders, which do not include cement, for example based on blast furnace slag, fly ash, metakaolin, etc.

Therefore, the present additive can be advantageously used both for hydraulic binders comprising Portland cement, and for geopolymeric and/or alkaline activated hydraulic binders, and for mixtures of two or more binders.

However, it has surprisingly been found that the present additive is particularly advantageous if added to geopolymeric hydraulic binders, preferably alkaline activated, such as for example hydraulic binders comprising blast furnace slag.

In accordance with the idea underlying the present invention, the additive for construction materials comprises at least one ionic polyelectrolyte, preferably an anionic polyelectrolyte, and at least one chelating agent.

Advantageously, the ionic polyelectrolyte is an anionic polyelectrolyte and comprises at least one among polynaphthalene-sulfonate (PNS), polymelamin-sulfonate (PMS), polycarboxylic acid (PC), polyethylene oxide polycarboxylic ethers (PCE), polyethylene oxide polyphosphonic ethers (PFE) and polyethylene oxide polysulfonic ethers (PSE).

Advantageously, the chelating agent comprises at least one between a phosphonic group and a carboxylic group.

Advantageously, the chelating agent comprises a compound comprising at least one phosphonic group and at least one carboxylic group, such as for example phospho-butan-tri-carboxylic acid (PBTC).

Advantageously, the chelating agent comprises at least one among phosphonate, polyethylene amine phosphonate, ethoxylated phosphonate, carboxylate. Advantageously, the phosphonate is hydroxy-ethylidene-diphosphonic acid (HEDP). Advantageously, the polyethylene amine phosphonates are selected from aminotrimethylene-phosphonic acid (ATP), ethylene-diamino-tetramethylene-phosphonic acid (EDTMP), diethylene-triamino-pentamethylene-phosphonic acid (DTPMP) and hexamethylene-diamino-tetramethyl-phosphonic acid (HEDTMP).

Advantageously, the chelating agent containing carboxylic groups is selected from ethylene-diamino-tetra-acetic acid (EDTA), hydroxy polycarboxylic acids, polymaleates.

In accordance with the preferential formulation of the additive object of the present invention, it advantageously comprises ethoxylated phosphonate as chelating agent and polynaphthalen-sulfonate as ionic polyelectrolyte.

In fact, it has been surprisingly found that an additive obtained from the combination of a chelating agent selected from the aforementioned family, and an anionic polyelectrolyte selected from the aforementioned family, allows considerably improving the rheological properties of the hydraulic binder, in particular by reducing the quantity of water in the mixture and increasing the mechanical resistance of the product obtained.

More in detail, it has been noted that a combination of chelating agent and anionic polyelectrolyte, as described above, allows a super-fluidifying (or dispersant) additive to be obtained which allows the fluidity of the hydraulic binder-water mixture to be increased with the same water content, and therefore allows the quantity of water necessary to reach the desired fluidity of the binder mixture to be reduced. Advantageously, the ratio between the quantity by weight of the chelating agent is comprised in and the quantity by weight of the ionic polyelectrolyte is comprised between 0.1 and 1.

Advantageously, moreover, the chelating agent is comprised in a quantity in the range from 0.05% to 2% with respect to the total weight of the binder and the ionic polyelectrolyte is comprised in an amount in the range from 0.1% to 5% with respect to the total weight of the binder.

Table 1 shows the flowing threshold values, expressed in Pascal, measured for a binder with no additive, a binder with only the anionic polyelectrolyte and a binder with the additive object of the present invention added, in accordance with the above preferential formulation.

More in detail, the aforesaid binder was preferably obtained from a mixture of granulated and ground blast furnace slag, activated with a solution of sodium silicate with a silicate modulus (SiO₂/Na₂O) of 0.5.

The flow limit shown in Table 1 was advantageously measured by means of a rheometric flow test and indicates the minimum effort necessary to induce a flow of the binder mixture.

Therefore, as can be seen from Table 1 reported below, the use of an additive as described above to a hydraulic binder advantageously allows the flow threshold to be reduced by even 65% (with reference to the binder without additives).

The present invention also relates to a hydraulic binder, advantageously of the geopolymeric type and preferably with alkaline activation, which comprises at least one alumino-silicate precursor, at least one alkaline activator, at least one setting accelerating additive and at least one dispersing additive of the type described above. Therefore, the dispersing additive employed in the aforesaid hydraulic binder comprises at least one ionic polyelectrolyte and at least one chelating agent.

Advantageously, the alumino-silicate precursor is selected from: metallurgical slags, siliceous fly ash (class F), calcined clays, natural pozzolans, synthetic glass, waste glass.

**Table 1: Flow threshold of hydraulic binders including blast furnace slag activated with sodium silicate, with and without additives.**

| **Mixture** | **Flow threshold [Pa]** |
|---|---|
| reference without additives | 3.2 |
| polynaphthalenesulfonate 0.5% | 7.3 |
| polynaphthalenesulfonate 1.0% | 7.3 |
| sulfonated polymelamine 0.5% | 4.3 |
| sulfonated polymelamine 1.0% | 4.3 |
| polycarboxylic ether 0.25% | 6.2 |
| polycarboxylic ether 0.50% | 5.3 |
| phosphonate 0.1% polinaphthalenesulfonate 0.5% | 1.1 |
| phosphonate 0.1% sulfonated polymelamine 0.5% | 1.2 |
| phosphonate 0.1% polycarboxylic ether 0.25% | 2.8 |
| phosphonate 0.1% polycarboxylic ether 0.50% | 2.7 |

More in detail, the term "metallurgical slags" will mean by-products deriving from metallurgical processes (primary or secondary), such as blast furnace slag, foundry slag or steelworks slags, etc.

Advantageously, the alumino-silicate precursor is blast furnace slag, which is preferably vitrified, granulated and ground.

In accordance with the first preferential embodiment, the blast furnace slag used as alumino-silicate precursor has the composition reported in Table 2 below. Advantageously, the alkaline activator comprises a sodium silicate solution, with a silicate modulus, calculated as the ratio between silicon oxide and sodium oxide (R = SiO₂/Na₂O) between 0.1 and 4.

Preferably, the silicate modulus is comprised between 0.3 and 1.

**Table 2: Composition of blast furnace slag.**

| Oxides | Compositional range [%] | Preferred example [%] |
|---|---|---|
| SiO2 | 26-53 | 36.2 |
| Al2O3 | 3-17 | 10.7 |
| CaO | 21-50 | 40.9 |
| MgO | 1-20 | 7.4 |
| Fe2O3 | 0.1-5.6 | 0.72 |
| TiO2 | 0.1-3.0 | 0.68 |
| MnO | 0.1-3.6 | 0.27 |
| K2O | 0.1-2.5 | 0.45 |
| Na2O | 0.1-1.6 | 0.22 |
| P2O5 | 0-0.1 | 0.01 |
| SO3 | 0.2-5.5 | 2.6 |

In accordance with the preferred embodiment, the sodium silicate solution comprises a sodium equivalent Na₂O value of about 3% with respect to the total weight of the aluminosilicate precursor and the silicate modulus is 0.5.

Advantageously, the setting accelerator is calcium carbonate (CaCO3). Advantageously, the setting accelerator is comprised in an amount in the range from 5% to 50% and preferably from 15% to 50% with respect to the total weight of the hydraulic binder.

Surprisingly, it has been found that calcium carbonate (CaCO₃) as a setting accelerating additive allows accelerating the hydration reaction of the hydraulic binder, as shown in Figure 1.

More in detail, Figure 1 shows a graph relating to the results of a calorimetry test (carried out with the semiadiabatic method) in which the hydration heat of the binder without calcium carbonate, with 15% of calcium carbonate and with the 50% calcium carbonate is measured.

In particular, the tested specimens were prepared by mixing the hydraulic binder with sand (in accordance with the EN 196-1 standard) and water with a water/binder ratio of 0.5.

Furthermore, the mechanical performances of the three specimens reported above (without calcium carbonate, with 15% calcium carbonate and with 50% calcium carbonate) were analyzed, and it emerged that the addition of calcium carbonate improves the mechanical properties, in particular for short curing (7 days), of the binder mixture, as apparent from Table 3 below.

**Table 3: Mechanical performance of a binder with and without calcium carbonate.**

| Mixture | Rc 7 days [Mpa] | Rc 28 days [Mpa] |
|---|---|---|
| Granulated slag | 18.2(6) | 44(1) |
| 15% CaCO3 | 34.7(9) | 51(2) |
| 50% CaCO3 | 37(1) | 51(2) |

The invention thus conceived therefore achieves its intended purposes.

## Claims

1. Additive for construction materials comprising at least one hydraulic binder, said additive being **characterized in that** it comprises:
- at least one chelating agent;
- at least one ionic polyelectrolyte.

2. Additive according to claim 1, **characterized in that** said ionic polyelectrolyte is an anionic polyelectrolyte and comprises at least one among polynaphthalene-sulfonate (PNS), polymelamin-sulfonate (PMS), polycarboxylic acid (PC), polyethylene oxide polycarboxylic ethers (PCE), polyethylene oxide polyphosphonic ethers (PFE) and polyethylene oxide polysulfonic ethers (PSE).

3. Additive according to claim 1 or 2, **characterized in that** said chelating agent comprises at least one between a phosphonic group and a carboxylic group.

4. Additive according to claim 3, **characterized in that** said chelating agent comprises at least one among a phosphonate, a polyethylene amine phosphonate, an ethoxylate phosphonate and a carboxylate.

5. Additive according to claim 4, **characterized in that**:
- said phosphonate is hydroxy-ethylidene-diphosphonic acid (HEDP);
- said polyethylene amine phosphonate is selected from: amino-trimethylenephosphonic acid (ATP), ethylene-diamino-tetramethylene-phosphonic acid (EDTMP), diethylene-triamino-pentamethylene-phosphonic acid (DTPMP) and hexamethylene-diamino-tetramethyl-phosphonic acid (HEDTMP);
- said carboxylate is selected from: ethylene-diamino-tetra-acetic acid (EDTA), hydroxy polycarboxylic acids and polymaleates.

6. Additive according to claims 2 and 4, **characterized in that** it comprises ethoxylated phosphonate as a chelating agent and polynaphthalen-sulfonate as an ionic polyelectrolyte.

7. Additive according to any one of the preceding claims, **characterized in that** the weight ratio between the quantity of said chelating agent and the quantity of said ionic polyelectrolyte in said additive is in the range from 0.1 to 1.

8. Hydraulic binder, which comprises:
- at least one alumino-silicate precursor;
- at least one alkaline activator;
- at least one setting accelerating additive;
- at least one dispersant additive, according to any one of the preceding claims.

9. Hydraulic binder according to claim 8, **characterized in that** said alumino-silicate precursor is selected from: metallurgical slags, siliceous fly ash (class F), calcined clays, natural pozzolans, synthetic glass, waste glass.

10. Hydraulic binder according to claim 8 or 9, **characterized in that** said alkaline activator comprises a sodium silicate solution;
said sodium silicate solution being provided with a silicate module (R), calculated as the ratio between the quantity by weight of silicon oxide and the quantity by weight of sodium oxide (SiO2/Na2O) in the range from 0.1 to 4.

11. Hydraulic binder according to any one of claims 8 to 10, **characterized in that** said setting accelerator comprises calcium carbonate (CaCO3).
